(19) Europäisches Patentamt
European Patent Office
Office européen des brevets

(11) Veröffentlichungsnummer: **0 067 426**
**B1**

(12) # EUROPÄISCHE PATENTSCHRIFT

(45) Veröffentlichungstag der Patentschrift: **26.02.86**

(21) Anmeldenummer: **82105098.6**

(22) Anmeldetag: **11.06.82**

(51) Int. Cl.⁴: **C 08 G 18/00,** C 08 G 18/84, C 08 L 97/02, B 27 N 3/00, C 08 G 18/76

(54) **Herstellung von Bauplatten unter Verwendung von Isocyanat/Aldehyd-Bindemitteln.**

(30) Priorität: **15.06.81 US 273680**

(43) Veröffentlichungstag der Anmeldung: **22.12.82 Patentblatt 82/51**

(45) Bekanntmachung des Hinweises auf die Patenterteilung: **26.02.86 Patentblatt 86/9**

(84) Benannte Vertragsstaaten: **AT BE DE FR GB IT SE**

(56) Entgegenhaltungen:
**DE-A-2 711 958**
**GB-A-1 351 555**
**US-A-3 930 110**

(73) Patentinhaber: **Mobay Chemical Corporation, Penn Lincoln Parkway West, Pittsburgh, Pennsylvania 15205 (US)**

(72) Erfinder: **Johns, William E., 305 Derby Street, Pullman Washington 99163 (US)**
Erfinder: **Leitheiser, Robert H., 668 Exmoor Court, Crystal Lake Illinois 60014 (US)**

(74) Vertreter: **Müller, Gerhard, Dr. et al, BAYER AG Konzernverwaltung RP Patentabteilung, D-5090 Leverkusen 1 Bayerwerk (DE)**

**EP 0 067 426 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschriebung**

Viele Produkte werden mit Hilfe des grundlegenden Verfahrens der Verdichtung oder Vereinigung von Körpern aus Cellulosematerialien unter Einsatz von Druck, Wärme und einem chemischen Bindemittel hergestellt. Zu diesen zählen Erzeugnisse auf Holz-Basis wie Sperrholz, Hartfaser-Preßplatten, Spanplatten und furnierte Spanplatten, sowie durch Pressen oder Formpressen hergestellte Erzeugnisse aus pflanzlichen Fasern wie Maisstengeln, Stroh oder Zuckerrohrbagasse, oder aus anderen Cellulosematerialien wie Pulpe, Papierschnitzeln oder dergleichen. Typischerweise sind die für die Herstellung solcher Produkte verwendeten Bindemittel warmhärtende Harze wie Phenol-Formaldehyd-, Resorcin-Formaldehyde, Melamin-Formaldehyd-, Harnstoff-Formaldehyd-, Harnstoff-Furfural- und kondensierte Furfurylalkohol-Harze. Zu anderen bekannten Bindemitteln zählen organische Polyisocyanate, die zum Verkleben von Sperrholz sowie allein oder zusammen mit Harnstoff- oder Melamin-Formaldehyd- Harzen als Klebemittel für Spanplatten verwendet verden. Typische, gemäß dem Stand der Technik offenbarte Bindemittel dieser Art sind Polyisocyanat-Formaldehyd-Mischungen (vgl. die US—PSen 3 919 017 und 3 930 110), Polyisocyanate (vgl. die US—PS 4 046 952 und die GB—PS 1 148 016) und Polyisocyanate in Verbindung mit Harnstoff-Formaldehyd-Harz und/oder Phenol-Formaldehyd-Harzen (vgl. die US—PS 4 209 433 und die GB—PS 1 148 016).

Ebenfalls bekannt ist die Verwendung von Furfural als rauchunterdrückendes Mittel in Polyurethan-Schaumstoffen (vgl. K. Ashida, "Novel Methods of Smoke Suppression in Isocyanurate Foams (1)", Advances in Urethane Science and Technology, Band 5, 1978). Schließlich wurde vorgeschlagen, Furfural und/oder Furfurylalkohol mit einem Isocyanat zu mischen, das ein Phosgenierungsprodukt eines Anilin-Formaldehyd-Kondensats ist, und danach gleichzeitig das Isocyanat zu trimerisierten und das Furfural und/oder den Furfurylalkohol zu polymerisieren, um dadurch einen Furan-modifizierten Isocyanurat-Schaumstoff herzustellen (vgl. die US—PS 4 232 127). In der GB—PS 1 351 555 werden PU-Hartschaumstoffe mit verbesserten Temperaturebeständigkeiten, geringerer Brennbarkeit etc. dadurch erhalten, daß man zur Herstellung der Schaumstoffe Polyole mit Formaldehyd, in der Wärme Formaldehyd angebenden Verbindungen oder anderen Aldehyden wie Furfural oder Benzaldehyd, zusammen mit Polyisocyanaten und üblichen Schaumstoffkatalysatoren und/oder Treibmitteln umsetzt.

Isocyanate haben, wie bereits vorher bemerkt, ihre Eignung als Bindemittel bei der Herstellung von Bauplatten aus Celluloseteilchen unter Beweis gestellt. Isocyanate, insbesondere Polymethylen-polyphenylisocyanate, können Produkte liefern, deren Eigenschaften im allgemeinen denjenigen von Erzeugnissen aus Phenol-Formaldehyd-Harzen gleich oder noch überlagen sind. Eines der Hauptprobleme hinsichtlich des Einsatzes von Isocyanaten sind deren relativ hohe Kosten im Vergleich zu denen von Phenol-Formaldehyd-Harzen. Obwohl der Einsatz eines Isocyanat-Bindemittels viele kostensenkende Vorteile bietet (wie kürzere Preßzeiten, niedrigere Bestreichungsraten und geringere Plattendichten), stehen die eigentlichen Einsatzkosten des Isocyanats dessen Verwendung hindernd entgegen.

Die vorliegende Erfindung beruht auf dem Befund, daß in hohem Maße geeignete Bindemittel für die Herstellung von Platten, insbesondere von Bauplatten, aus Cellulose-Teilchen dadurch erhalten werden können, daß Polyisocyanate auf Methylen-di(phenylisocyanat)-Basis einfach mit einem Aldehyd vermischt werden, der in dem Polyisocyanat löslich und zu einer Reaktion mit diesem bei Temperaturen oberhalb von 121°C (250°F) befähigt sind. Es wurde nämlich gefunden, daß der Zusatz eines solchen Aldehyds zu den Polyisocyanaten nicht nur den Kostenaufwand für das Isocyanat-Bindemittel beträchtlich reduziert, sondern auch die Herstellung von Bauplatten mit verbesserten physikalischen Eigenschaften im Vergleich zu solchen Platten erlaubt, die unter Verwendung dem Isocyanats allein hergestell wurden.

Als Aldehyde werden erfindungsgemäß solche aus der Gruppe Furfural, Benzaldehyd, Simtaldehyd, Nonylaldehyd, Butyraldehyd, Pelargeonaldehyd, Chlorobenzaldehyd, o-Tolylaldehyd, 2-Naphthaldehyd, Piperonal und Vanillin verwendet.

Die vorliegende Erfindung richtet sich demgemäß auf ein verfahren zur Herstellung von Bauplatten aus Cellulose-Teilchen unter Verwendung der genannten neuen Bindemittel-Zusammensetzungen. Die vorliegende Erfindung richtet sich ebenfalls auf Mischungen des Bindemittels mit Cellulose-Teilchen.

Der Isocyanat-Bestandteil des Bindemittels gemäß der vorliegenden Erfindung kann im wesentlichen jedes Polyisocyanat auf Methylen-di(phenylisocyanat)-Basis sein. Der Begriff "Polyisocyanat auf Methylen-di(phenylisocyanat)-Basis", wie er hierin verwendet wird, bezeichnet Polymethylen-polyphenylisocyanate, Polyisocyanate mit Urethangruppen, die durch Reaktion relativ kleiner Mengen niedermolekularer Diole mit Methylen-di(phenylisocyanat) erhalten wurden (vgl. z.B. die US-PSen 3 644 457, 3 394 164 und 4 115 429), Carbodiimid-Gruppen enthaltende Polyisocyanate, die sich von Methylen-di(phenylisocyanat) ableiten (vgl. z.B. die US-PSen 3 152 162, 3 384 653, 3 449 256, 4 014 935, 4 088 665 und 4 154 752), sowie Gemische aus diesen. Derartige Isocyanate sind in der Fachwelt wohlbekannt und im Handel erhältlich. Derzeit werden Polymethylen-polyphenylisocyanate (z.B. solche, wie sie durch Phosgenierung eines Anilin-Formaldehyd-Kondensats erhalten werden) bevorzugt verwendet, und besonders bevorzugt wird eine Mischung von Isocyanaten nachstehender mittlerer Struktur

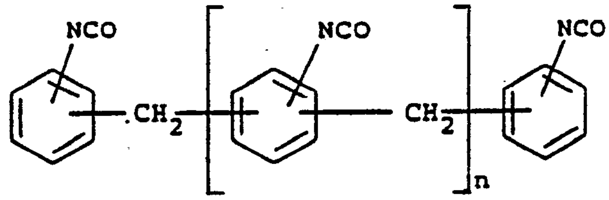

verwendet, in der B einen Wert von 0,5 bis 4, vorzugsweise von 0,5 bis 3, besitzt. Solche Isocyanat-Gemische sind in der Fachwelt bekannt und im Handel erhältlich.

Wie bereits oben festgestellt wurde, muß der gemäß der vorliegenden Erfindung verwendete Aldehyd in dem Isocyanat löslich und zur Reaktion mit diesem befähigt sein. Aldehyde, die erfindungsgemäß als geeignet befunden wurden, sind Furfural, Benzaldehyd, Pelargonaldehyd, Zimtaldehyd, Nonylaldehyd, Butyraldehyd, Salicylaldehyd, Chlorobenzaldehyd, o-Tolylaldehyd, 2-Naphthaldehyd, Piperonal und Vanillal. Der gegenwärtig bevorzugte Aldehyd ist Furfural. Wenngleich die hierin verwendeten Aldehyde als reaktionsfähig gegenüber dem Isocyanat-Bestandteil bezeichnet werden, so ist nicht mit letzter Sicherheit bekannt, daß der betreffende Aldehyd mit dem Isocyanat reagiert. Beim Erhitzen der hier verwendeten Aldehyde mit den Isocyanaten wird jedoch ein jeweils charakteristischer Aldehyd-Geruch nicht wahrgenommen, so daß daraus geschlossen wird, daß Aldehyd und Isocyanat tatsächlich miteinander reagieren.

Der gemäß der vorliegenden Erfindung eingesetzte Aldehyd wird als solcher verwendet. Das Verhältnis Isocyanat zu Aldehyd ist nicht kritisch, und das optimale Verhältnis für eine vorgegebene Anwendungsmöglichkeit kann durch Routineversuche bestimmt werden. Im allgemeinen kann die Menge des Aldehyds 1 bis 50 Gew.-Teile auf 100 Gew.-Teile des Gemische aus Aldehyd und Isocyanat betragen. Besonders bevorzugt wird eine Aldehyd-Menge im Bereich von 3 bis 30 Gew.-Teilen. Vorzugsweise wird eine solche Aldehyd-Menge zugesetzt, daß die Viskosität der Mischung unterhalb von 1 000 mPa.s, günstiger noch unterhalb von 500 mPa.s, liegt (Brookfield bei 25°C). Besonders bevorzugt wird eine Viskosität des Gemischs zwischen 25 und 300 mPa.s. Naturgemäß ist es auch möglich, noch höhere Aldehyd-Anteile zu verwenden (z.B. bis zu 60% oder noch mehr), wenn inerte Füllstoffe wie hochdisperses Silicuimdioxid zugesetzt werden.

Das Bindemittel-System kenn in jeder geeigneten Weise zugesetzt oder zur Anwendung gebracht werden, etwa durch Bestreichen mit Pinsel bzw. Bürste, Eintauchen, Spritzen, Walzenbeschichten etc. Bei der bevorzugten Form der praktischen Ausführung der vorliegenden Erfindung werden das Polyisocyanat und der Aldehyd gemeinsam zugesetzt oder aufgetragen, da sie ihrer Eigenart nach miteinander mischbar sind. Die Menge des für einen speziellen Anwendungzweck benötigten Bindemittels kann durch einfache Versuche ermittelt werden. Mengen im Bereich von 2 bis 5 Gew.-%, bezogen auf das Trockengewicht des Cellulose-Materials, sind mit guten Ergebnissen verwendet worden, wenngliche auch Mengen bis hinauf zu 20 Gew.-% vorteilhaft verwendet werden können.

Es ist ausdrücklich festzustellen, daß das neue Isocyanat-Aldehyd-Bindemittelsystem für die Herstellung einer großen Mannigfaltigkeit von Produkten aus vielen verschiedenen Cellulose-Materialien oder Mischungen solcher Materialien verwendet werden kann. Zur Erläuterung wird jedoch die Erfindung im folgenden insbesondere hinsichtlich der Herstellung von Spanplatten beschrieben.

Spanplatten werden gemäß der Erfindung in der Weise hergestellt, daß Teilchen aus Holz oder anderen Cellulose-Materialien unter Einsatz von Wärme, Durch sowie einem ein Polyisocyanat und einen Aldehyd enthaltenden Bindemittelsystem miteinander verbunden werden. Die Polyisocyanat-Komponente des Bindemittelsystems kann, wie bereits im Vorstehenden erwähnt, im wesentlichen jedes Polyisocyanat auf Methylen-di(phenylisocyanat)-Basis sein. Die bevorzugten Polyisocyanate sind Polyphenylisocyanate, und von diesen werden die oben bezeichneten mittleren Strukturen besonders bevorzugt.

Das Ausgangsmaterial für die Spanplatten umfaßt Teilchen aus Cellulose-Material, vorzugsweise Holzteilchen aus Abfällen der Nutzholz-Bearbeitung wie Hobelspäne, Furnierschnitzel und dergleichen, sowie speziell gefertigte Teilchen wie Flocken, Fäden, Plättchen und dergleichen. Die Verfahren zur Erzeugung geeigneter Teilchen sind wohlbekannt und gebräuchlich. Gegebenenfalls können Gemische aus Cellulose-Teilchen verwendet werden. Beispielsweise werden Spanplatten mit Erfolg aus Holzteilchen-Gemischen hergestellt, die bis zu 30% Borke enthalten. Typischerweise müssen die Teilchen auf einen Feuchtigkeitsgehalt zwischen 4 und 10% getrocknet werden, wodurch erhebliche Trocknungskosten verursacht werden. Gemäß der vorliegenden Erfindung können Teilchen mit einem Feuchtigkeitsgehält bis zu 20% eingesetzt werden. Im allgemeinen enthalten Teilchen aus Nutzholz-Abfällen etwa 10 bis 20% Feuchtigkeit und können ohne weitere Trocknung verwendet werden. Auch Teilchen, die geringere Mengen Feuchtigkeit enthalten, können verwendet werden, jedoch erhöhen sich hierdurch die Trocknungskosten in unnötiger Weise.

Spanplatten werden gemäß bevorzugter Praxis durch Bespritzen der Teilchen mit Bindemittel unter Rühren oder in rotierenden Trommeln hergestellt. Die eingesetzte Bindemittel-Menge kann im allgemeinen 1 bis 20 Gew.-%, je nach den angestrebten Eigenschaften des Endprodukts, betragen. Vorzugsweise werden etwa 2 bis 5 Gew.-% des Bindemittelsystems, bezogen auf das Gewicht der ofengetrockneten Teilchen, zugesetzt. Die Komponenten des Bindemittelsystems werden als vorher hergestellte Mischung

zugesetzt, obwohl sie gewünschtenfalls auch getrennt gleichzeitig zugegeben werden können. Andere Materialien wie Wachsleim oder Flammverzögerungsmittel können den Teilchen während des Mischungsvorgangs ebenfalls zugesetzt werden.

Nach für die Herstellung einer einheitlichen Mischung ausreichendem Mischen werden die beschichteten Cellulose-Teilchen in die Form einer lockeren Matte oder eines Vlieses gebracht, die vorzugsweise etwa 6 bis 20 Gew.-% Feuchtigkeit enthalten. Die Matte wird dann in eine beheizte Presse zwischen Druckausgleichsplatten gebracht, die erforderlichenfalls mit einem Trennmittel behandelt werden können, und dann zusammengepreßt, wodurch die Teilchen zu einer Platte verdichtet werden. Preßzeiten, Temperaturen und Drücke unterliegen weiten Variationen, je nach der Dicke der hergestellten Platte, der gewünschten Dichte der Platte, der Größe der eingesetzten Teilchen und anderer, in der Fachwelt wohlbekannter Faktoren. Beispielsweise sind jedoch für 12,7 mm (1/2 inch) dicke Spanplatten mittlerer Dichte Drücke von etwa 24,1 bis 48,3 bar (350—700 psi) und Temperaturen von etwa 132 bis 218°C (270°F—425°F) typische Werte. Die Preßzeiten betragen für Spanplatten von 12,7 mm (1/2 inch) Dicke typischerweise 2 bis 7 min. Wie in der Fachwelt allgemein bekannt ist, hängen diese Parameter von der gewünschten Dicke des fertigen Produkts ab. Da ein Teil der in der Matte vorhandenen Feuchtigkeit mit dem Polyisocyanat unter Bildung von Polyharnstoff reagiert, braucht sie während des Preßcyclus nicht verdampft zu werden.

Die vorliegende Erfindung wird durch die folgenden Beispiele näher erläutert, ist jedoch nicht auf diese beschränkt. In den Beispielen beziehen sich, sofern nicht anders bezeichnet, sämtliche Angaben von Teilen und Prozentsätzen auf das Gewicht.

Beispiele

Beispiele 1 bis 24

In den nachstehenden Beispielen waren die verwendeten Isocyanate sämtlich Phosgenierungsprodukte von Anilin-Formaldehyd-Kondensaten, die sich wie folgt charakterisieren lassen:

(a) Polyisocyanat A:
Ein Polymethylen-polyphenylisocyanat mit einem Gewichtsmittel des Molekulargewichts von 410, einer Brookfield-Viskosität bei 25°C von 225 mPa.s und einem NCO-Gehalt von 31,5%.

(b) Polyisocyanat B:
Ein Polymethylen-polyphenylisocyanat mit einem Gewichtsmittel des Molekulargewichts von 410, einer Brookfield-Viskosität bei 25°C von 291 mPa.s und einem NCO-Gehalt von 31,5%.

(c) Polyisocyanat C:
Ein Polymethylen-polyphenylisocyanat mit einem Gewichtsmittel des Molekulargewichts von 480, einer Brookfield-Viskosität bei 25°C von 558 mPa.s und einem NCO-Gehalt von 31,3%.

(d) Polyisocyanat D:
Ein Polymethylen-polyphenylisocyanat mit einem Gewichtsmittel des Molekulargewichts von 510, einer Brookfield-Viskosität bei 25°C von 2 180 mPa.s und einem NCO-Gehalt von 30,8%.

(e) Polyisocyanat E:
Ein Polymethylen-polyphenylisocyanat mit einem Gewichtsmittel des Molekulargewichts von 610, einer Brookfield-Viskosität bei 25°C von 4 525 mPa.s und einem NCO-Gehalt von 30,2%.

(f) Polyisocyanat F:
Ein Polymethylen-polyphenylisocyanat mit einem Gewichtsmittel des Molekulargewichts von 720, einer Brookfield-Viskosität bei 25°C von 11 350 mPa.s und einem NCO-Gehalt von 29,9%.

In den nachstehenden Beispielen wurden die vier in Tabelle I angegebenen Viskositäts-Werte ausgewählt, und die zur Erzielung jedes dieser Viskositätswerte bei jedem Isocyanat erforderlichen Mengen Furfural, die in der Tabelle I aufgeführt sind, wurden zugesetzt.

Platten wurden in der Weise hergestellt, daß das bezeichnete Bindemittel in einen Drehtrommelmischer gespritzt wurde, der vorher mit Ringschnitt-Flocken aus Douglas-Fichte beschicht worden war. Das Bindemittel wurde in einem Mengenverhältnis von 3 Gew.-Teilen Bindemittel zu 97 Gew.-Teilen Holzflocken eingesetzt. Nach einer Betriebsdauer des Trommelmischers, die ausreichend war, um das Bindemittel gleichförmig zu verteillen, wurden die beschichteten Teilchen dem Mischer entnommen und in einer elektrisch beheizten, hydraulisch betriebenen Laboratoriumspresse zu einer Platte von 61,0 cm×71,2 cm×1,27 cm (24 inch×28 inch×1/2 inch) geformt. Die Presse wurde bei einer Temperatur von etwa 177°C (350°F) gehalten, und ein Preßcyclus von 5 min wurde angewandt. Druckausgleichsplatten halterten alle Seiten der Platte während des Pressens. Um das Kleben der Platte an den Druckausgleichsplatten zu verhindern, wurde auf jede der letzteren eine 10-proz. wäßrige Zinkstearat-Lösung aufgesprüht. Die erhaltenen Spanplatten hatten sämtlich eine Dichte von 0.673 g/cm$^3$ (42 lbs./cu. ft.).

Die Platten wurden dann bei 22,2°C (72°F) und einer relativen Luftfeuchtigkeit von 65% gehalten, bis keine Gewichtsänderung mehr festgestellt wurde (dieses dauerte im allgemeinen 3 bis 10 Tage). Die

Platten wurden dann gemäß ASTM D-1037-72 zur Bestimmung des Bruchmoduls (MOR; Biegefestigkeit), das Elastizitätsmoduls (MOE), der Zugfestigkeit senkrecht zu der Oberfläche (IB), des 6-Cyclen-MOR und des Feucht-MOR (MOR nach 2 h in siedendem Wasser und 1 h Einweichen in kaltem Wasser) untersucht. Die Ergebnisse dieser Teste sind in Tabelle I aufgeführt.

TABELLE I

| Bin-de-mitt. | Verw. Iso-cyanat | Furfural Tl./100 Tl. Isocyanat | Viskos.⁺⁾ des Bindem. | MOR $N/mm^2$ (psi) | 6-Cyclen-MOR $N/mm^2$ (psi) | MOE $10^3 N/mm^3$ ($10^6$psi) | IB $N/mm^2$ (psi) | Feucht-MOR $N/mm^2$ (psi) |
|---|---|---|---|---|---|---|---|---|
| 1 | A | 0 | 225 | 18,04 2616 | 5,12 743 | 3,03 0,440 | 1,07 155 | 5,94 861 |
| 2 | A | 6,2 | 100 | 18,19 2638 | 4,12 597 | 3,22 0,467 | 0,94 137 | 6,50 942 |
| 3 | A | 12,6 | 50 | 20,26 2938 | 8,06 1169 | 3,27 0,474 | 0,97 141 | 6,57 953 |
| 4 | A | 22,4 | 25 | 20,25 2937 | 4,21 611 | 3,43 0,497 | 0,74 106 | 5,48 795 |
| 5 | B | 1,5 | 225 | 20,48 2970 | 7,78 1128 | 3,30 0,479 | 1,04 151 | 6,94 1006 |
| 6 | B | 7,4 | 100 | 20,53 2977 | 6,75 979 | 3,28 0,476 | 0,97 141 | 6,91 1002 |
| 7 | B | 14,2 | 50 | 19,32 2802 | 8,17 1185 | 3,30 0,478 | 0,96 139 | 6,57 953 |
| 8 | B | 24,6 | 25 | 17,24 2501 | 5,36 778 | 3,08 0,447 | 0,81 117 | 5,84 847 |
| 9 | C | 5,3 | 225 | 18,71 2713 | 9,70 1407 | 3,36 0,488 | 0,98 142 | 6,71 973 |
| 10 | C | 11,6 | 100 | 20,29 2942 | 8,16 1183 | 3,34 0,484 | 0,99 144 | 6,58 954 |
| 11 | C | 18,7 | 50 | 17,71 2569 | 7,40 1073 | 3,16 0,459 | 0,81 118 | 5,87 851 |
| 12 | C | 27,8 | 25 | 16,11 2236 | 5,85 849 | 3,05 0,443 | 0,70 101 | 5,63 816 |

TABELLE I (continued)

| Bin-de-mitt. | Verw. Iso-cyanat | Furfural Tl./100 Tl. Isocyanat | Viskos.[+)] des Bindem. | MOR N/mm² (psi) | 6-Cyclen-MOR N/mm² (psi) | MOE $10^3$N/mm³ ($10^6$psi) | IB N/mm² (psi) | Feucht-MOR N/mm² (psi) |
|---|---|---|---|---|---|---|---|---|
| 13 | D | 12,4 | 225 | 21,40 3103 | 7,[illegible] [illegible]15 | 3,35 0,48[illegible] | 0,91 132 | 6,50 943 |
| 14 | D | 18,7 | 100 | 17,47 2533 | 6,52 945 | 3,16 0,459 | 0,83 120 | 6,34 920 |
| 15 | D | 25,2 | 50 | 16,70 2422 | 5,84 847 | 3,08 0,446 | 0,72 105 | 5,47 793 |
| 16 | D | 33,8 | 25 | 19,[illegible] 2783 | 5,29 767 | 3,14 0,455 | 0,75 109 | 5,41 784 |
| 17 | E | 14,4 | 225 | 21,26 3084 | 6,65 964 | 3,34 0,484 | 0,99 143 | 6,88 998 |
| 18 | E | 20,6 | 100 | 20,99 3044 | 6,14 890 | 3,36 0,[illegible]87 | 0,82 119 | 6,18 896 |
| 19 | E | 27,2 | 50 | 17,82 2585 | 5,61 813 | 3,03 0,440 | 0,68 98 | 5,12 743 |
| 20 | E | 36,6 | 25 | 15,67 2273 | 4,05 587 | 3,10 0,449 | 0,74 107 | 5,65 820 |
| 21 | F | 16,8 | 225 | 20,22 2933 | 7,21 [illegible] | 3,28 0,476 | 0,95 138 | 5,83 846 |
| 22 | F | 22,7 | [illegible]00 | 18,[illegible] [illegible]643 | 7,5[illegible] | 3,03 0,4[illegible] | 1,03 [illegible] | 5,68 824 |
| 23 | F | 29,4 | 50 | 15,51 2250 | 5.61 813 | 3,14 0,456 | 0,56 81 | 4,83 700 |
| 24 | F | 38,0 | 25 | 16,43 2383 | 3,60 522 | 2,99 0,433 | 0,62 90 | 4,70 681 |

+) in mPa.s/25°C (Brookfield-Viskosimeter)

Beispiel 25

Das Bindemittel in diesem Beispiel bestand aus einem Gemisch aus 25 Teilen Polyisocyanat D und 6 Teilen Benzaldehyd. 3 Teile dieses Gemischs wurden mit 97 Teilen Holzschnitzeln wie in dem vorhergehenden Beispiel angegeben vermischt. Nach der Arbeitsweise des vorhergehenden Beispiels wurde eine Platte hergestellt. Die so erhaltene Platte hatte ein spezifisches Gewicht von 0,67, sowie die Test-Werte IB=0,765 N/mm$^2$ (111 psi), MOR=17,23 N/mm$^2$ (2500 psi) und Feucht-MOR=12,87 N/mm$^2$ (1866 psi).

Beispiele 26 bis 30

Das Bindemittel in deisen Beispielen bestand aus einem Gemisch aus 25 Teilen Polyisocyanat D und 6 Teilen des in Tabelle II aufgeführten Aldehyds. 31 Teile des Gemischs wurden mit 1 036 Teilen Holzschnitzeln wie in Beispiel 1 angegeben vermischt. Nach der Arbeitsweise des Beispiels 1, jedoch mit der Abänderung, daß der Preßcyclus 7 min statt 5 min betrug, wurden Platten hergestellt. IB, MOR und Feucht-MOR der Platten wurden bestimmt. Die hierfür erhaltenen Ergebnisse sind in Tabelle II aufgeführt.

TABELLE II

| Beispiel | Aldehyd | IB N/mm$^2$ (psi) | MOR N/mm$^2$ (psi) | Feucht-MOR N/mm$^2$ (psi) |
|---|---|---|---|---|
| 26 | Zimtaldehyd | 0,63 (92) | 16,31 (2366) | 8,29 (1203) |
| 27 | Tolylaldehyd | 0,76 (110) | 16,27 (2359) | 8,34 (1209) |
| 28 | Nonylaldehyd | 0,68 (99) | 15,83 (2296) | 5,92 (859) |
| 30 | Butyraldehyd | 0,59 (72) | 13,22 (1917) | 5,74 (832) |

**Patentansprüche**

1. Verfahren zur Herstellung von Platten aus Cellulose-Teilchen durch Beschichten der Cellulose-Teilchen mit einer Bindemittel-Zusammensetzung und anschließendes Verpressen der beschichteten Cellulose-Teilchen bei höherer Temperatur, dadurch gekennzeichnet, daß die Bindemittel-Zusammensetzung aus einer Mischung aus einem Polyisocyanat auf Methylen-di(phenylisocyanat)-Basis und Aldehyden aus der Gruppe von Furfural, Benzaldehyd, Zimtaldehyd, Nonylaldehyd, Butyraldehyd, Pelargonaldehyd, Chlorobenzaldehyd, o-Tolylaldehyd, Z-Naphthaldehyd, Piperonal und Vanillal besteht und der Aldehyd in einer Menge von 1 bis 50 Gew.-Tielen auf 100 Gew.-Teile der Mischung aus Aldehyd und Polyisocyanat verwendet wird.

2. Verfahren nach Anspruch 1, dadurch gekennzeichnet, daß das Isocyanat ein Polymethylen-polyphenylisocyanat ist.

3. Verfahren nach Anspruch 2, dadurch gekennzeichnet, daß das Isocyanat eine Isocyanat-Mischung ist, die die nachstehende mittlere Formel besitzt

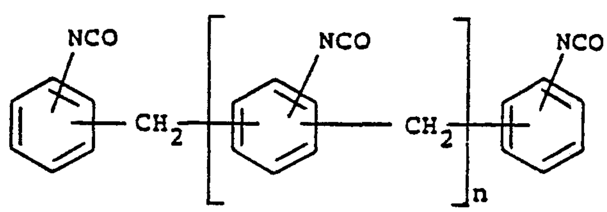

in der n einen Wert von 0,5 b is 4 hat.

4. Verfahren nach Ansprüchen 1 bis 3, dadurch gekennzeichnet, daß der Aldehyd in einer Menge von 3 bis 30 Gew.-Teilen auf 100 Gew.-Teile der Mischung aus Aldehyd und Polyisocyanat verwendet wird.

5. Verfahren nach Ansprüchen 1 bis 4 dadurch gekennzeichnet, daß der Aldehyd Furfural ist.

6. Zusammensetzung, bestehend aus

a) einem Polyisocyanat auf Methylen-di(phenylisocyanat)-Basis

b) einem Aldehyd aus der Gruppe Furfural, Benzaldehyd, Zimtaldehyd, Nonylaldehyd, Butyraldehyd, Pelargonaldehyd, Chlorbenzaldehyd, o-Tolylaldehyd, 2-Naphthaldehyd, Piperonal und Vanillal wobei die Menge von b) 1 bis 50 Gew.-Teile pro 100 Gew.-Teile a)+b) beträgt, und

c) Cellulose-Teilchen, wobei 1 bis 20 Gew.-% (a+b), bezogen auf das Gewicht der ofengetrockneten Cellulose-Teilchen c) zugesetzt sind.

7. Zusammensetzung nach Anspruch 6, dadurch gekennzeichnet, daß die Menge b) 3 bis 30 Gew.-Teile auf 100 Teile (a+b) betragt und 2 bis 5 Gew.-% (a+b) bezogen auf das Gewicht der ofengetrockneten Cellulose-Teilchen c), zugesetzt sind.

8. Zusammensetzung nach Ansprüchen 6 und 7, dadurch gekennzeichnet, daß der Aldehyd b) Furfural ist.

**Revendications**

1. Procédé de production de plaques de particules de cellulose par enduction des particules de cellulose avec une composition de liant et compression subséquante des particules de cellulose enduites, à température élevée, caractérisé en ce que la composition de liant est formée d'un mélange d'un polyisocyanate à base de méthylène-di(phénylisocyanate) et d'aldéhydes du groupe comprenant le furfural, le benzaldéhyde, le cinnamaldéhyde, le nonylaldéhyde, le butyraldéhyde, le pélargonaldéhyde, le chlorobenzaldéhyde, le o-tolylaldéhyde, le 2-naphtaldéhyde, le pipéronal et le vanillal et l'aldéhyde est utilisé en une quantité de 1 à 50 parties en poids pour 100 parties en poids du mélange d'aldéhyde et de polyisocyanate.

2. Procédé suivant la revendication 1, caractérisé en ce que l'isocyanate est un polyméthylènepolyphénylisocyanate.

3. Procédé suivant la revendication 2, caractérisé en ce que l'isocyanate est un mélange d'isocyanates qui possède la formule moyenne ci-après

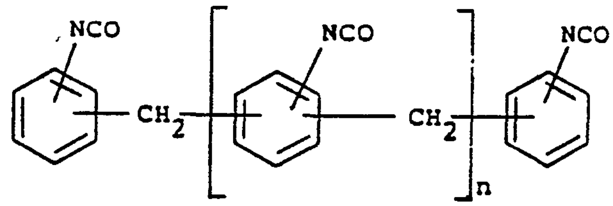

dans laquelle n a une valeur de 0,5 à 4.

4. Procédé suivant les revendications 1 à 3, caractérisé en ce que l'aldéhyde est utilisé en une quantité de 3 à 30 parties en poids pour 100 parties en poids du mélange d'aldéhyde et de polyisocyanate.

5. Procédé suivant les revendications 1 à 4, caractérisé en ce que l'aldéhyde est le furfural.

6. Composition, comprenant

a) un polyisocyanate à base de méthylène-di(phénylisocyanate),

b) un aldéhyde du groupe comprenant le furfural, le benzaldéhyde, le cinnamaldéhyde, le nonylaldéhyde, la butyraldéhyde, le pélargonaldéhyde, le chlorobenzaldéhyde, le o-tolylaldéhyde, le 2-naphtaldéhyde, le pipéronal et le vanillal, la quantité de b) s'élevant à 1—50 parties en poids pour 100 parties en poids de a)+b), et

c) des particules de cellulose, et on ajoute 1 à 20% en poids de (a+b), par rapport au poids des particules de cellulose c) séchées au four.

7. Composition suivant la revendication 6, caractérisée en ce que la quantité de b) est de 3 à 30 parties en poids pour 100 parties en poids de (a+b) et on ajoute 2 à 5% en poids de (a+b) par rapport au poids des particules de cellulose c) séchées au four.

8. Composition suivant les revendications 6 et 7, caractérisée en ce que l'aldéhyde b) est le furfural.

**Claims**

1. Process for the production of panels from cellulose particles by coating the cellulose particles with a binder composition and subsequently compressing the coated cellulose particles at an elevated temperature, characterised in that the binder composition consists of a mixture of a polyisocyanate based on methylene di(phenylisocyanate) and aldehydes from the group comprising furfural, benzaldehyde, cinnamaldehyde, nonyl aldehyde, butyraldehyde, pelargonaldehyde, chlorobenzaldehyde, o-tolylaldehdyde, 2-naphthaldehyde, piperonal and vanillal and the aldehyde is used in a quantity of 1 to 50 parts of weight per 100 parts by weight of the mixture of aldehyde and polyisocyanate.

2. Process according to Claim 1, characterised in that the isocyanate is a polymethylene polyphenyl isocyanate.

3. Process according to Claim 2, characterised in that the isocyanate is an isocyanate mixture which has the following average formula

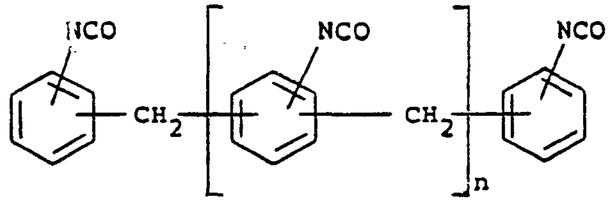

in which n has a value from 0.5 to 4.

4. Process according to Claims 1 to 3, characterised in that the aldehyde is used in a quantity of 3 to 30 parts by weight per 100 parts by weight of the mixture of aldehyde and polyisocyanate.

5. Process according to Claims 1 to 4, characterised in that the aldehyde is furfural.

6. Composition, consisting of

a) a polyisocyanate based on methylene di(phenylisocyanate),

b) an aldehyde from the group comprising furfural, benzaldehyde, cinnamaldehyde, nonyl aldehyde, butyraldehyde, pelargonaldehyde, chlorobenzaldehyde, o-tolylaldehyde, 2-naphthaldehyde piperonal and vanillal, the quantity of b) being 1 to 50 parts by weight per 100 parts by weight of a)+b), and

c) cellulose particles, 1 to 20% by weight of (a+b), based on the weight of the oven-dried cellulose particles c), being added.

7. Composition according to Claim 6, characterised in that the quantity of b) is 3 to 30 parts by weight per 100 parts of (a+b) and 2 to 5% by weight of (a+b), based on the weight of the oven-dried cellulose particles c), are added.

8. Composition according to Claims 6 and 7, characterised in that the aldehyde b) is furfural.